# EUROPÄISCHE PATENTSCHRIFT

(11) **EP 0 852 855 B1**
(45) Veröffentlichungstag und Bekanntmachung des Hinweises auf die Patenterteilung: **04.08.1999**
(21) Anmeldenummer: 96934429.0
(22) Anmeldetag: 19.09.1996
(51) Int. Cl.: H04B 7/26, H04J 3/06

(54) **ZU SYNCHRONISIERENDE BASISSTATIONEN EINES DRAHTLOSEN MEHRZELLEN-TELEKOMMUNIKATIONSSYSTEMS**
BASE STATIONS REQUIRING SYNCHRONISATION IN A RADIO MULTI-CELLULAR TELECOMMUNICATION SYSTEM
STATIONS DE BASE A SYNCHRONISER D'UN SYSTEME DE TELECOMMUNICATIONS MULTICELLULAIRE SANS FIL

(30) Priorität: 29.09.1995 DE 19536587
(43) Veröffentlichungstag der Anmeldung: 15.07.1998
(73) Patentinhaber: SIEMENS AKTIENGESELLSCHAFT, 80333 München (DE)
(72) Erfinder: WEWERS, Otger, D-46395 Bocholt (DE); BIEDERMANN, Rolf, D-46499 Hamminkeln (DE)
(86) Internationale Anmeldenummer: DE9601782
(87) Internationale Veröffentlichungsnummer: WO9713335

(56) Entgegenhaltungen:
- WO-A-94/18764
- DE-A- 2 812 774
- MOBILE KOMMUNIKATION (MOBILE COMMUNICATION), NEU-ULM, GERMANY, SEPT. 1993, Nr. 124, September 1993, GERMANY, Seiten 277-289, XP000645753 ZHU W: "A local TDMA frame/slot synchronization protocol for short range mobile radio networks"

## Beschreibung

Ein drahtloses Mehrzellen-Telekommunikationssystem ist ein Nachrichtensystem mit einer drahtlosen Nachrichtenübertragungsstrecke zwischen einer Nachrichtenquelle und einer Nachrichtensenke zur Nachrichtenverarbeitung und -übertragung, bei dem an jedem x-beliebigen Ort des Nachrichtensystems (mobiler Charakter des Nachrichtensystems) die Nachrichten zellenbezogen verarbeitet und zellenbezogen oder zellenübergreifend übertragen werden. Während die zellenbezogene Übertragung ausschließlich drahtlos erfolgt, kann die zellenübergreifende Nachrichtenübertragung drahtlos/-gebunden oder drahtlos sein. Die Nachrichtenverarbeitung und -übertragung kann dabei in einer bevorzugten Übertragungsrichtung (Simplex-Betrieb) oder in beiden Übertragungsrichtungen (Duplex-Betrieb) erfolgen. Außerdem kann die Nachrichtenverarbeitung analog oder digital sein. Die Nachrichtenverarbeitung und die drahtlose Nachrichtenübertragung erfolgt vorzugsweise nach diversen Funkstandards wie DECT, WCPS (amerik. DECT-Version), GSM einschließlich des Derivats DCS1800, ADC (amerik. GSM-Version), JDC (jap. GSM-Version) etc. Als drahtlose Übertragungstechnik können neben der Funkübertragung auch andere drahtlose Übertragungsarten eingesetzt werden, wie z.B. die Infrarot-Übertragung.

"Nachricht" ist ein übergeordneter Begriff, der sowohl für den Sinngehalt (Information) als auch für die physikalische Repräsentation (Signal) steht. Signale können dabei z. B.
(1) Bilder
(2) gesprochene Wörter
(3) geschriebene Wörter
(4) verschlüsselte Wörter oder Bilder
repräsentieren.

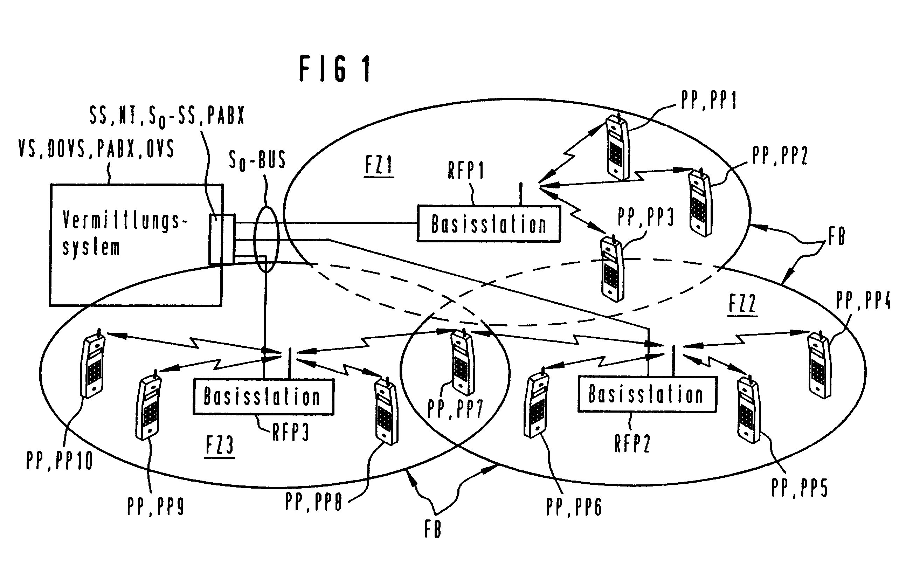

Drahtlose Mehrzellen-Telekommunikationssysteme der vorstehend umrissenen Art sind beispielsweise zelluläre DECT-Systeme (**D**igital **E**uropean **C**ordless **T**elecommunication; vgl. **(1):** Nachrichtentechnik Elektronik 42 (1992) Jan./Feb., Nr. 1, Berlin, DE; U. Pilger: "Struktur des DECT-Standards", Seiten 23 bis 29; **(2):** telcom report 16 (1993) Nr. 1, J. H. Koch: "Digitaler Komfort für schnurlose Telekommunikation - DECT-Standart eröffnet neue Nutzungsgebiete", Seiten 26 und 27; **(3):** tec 2/93 - Das technische Magazin von Ascom "Wege zur universellen mobilen Telekommunikation", Seiten 35 bis 42; **(4):** Funkschau (1994) Heft 23, "Sprache und Daten schnurlos übertragen", Seiten 74 bis 78) oder GAP-Systeme (Generic **A**ccess **P**rofile; ETSI-Publikation prETS 300 444, April 1995, Final Draft, ETSI, FR), die gemäß der Darstellung in Figur 1 aufgebaut sein können. Solche DECT/GAP-spezifischen Mehrzellen-Telekommunikationssysteme werden unter dem Begriff "**C**ordless **M**ulticell **I**ntegration (CMI)" geführt. Bei den GAP-Systemen handelt es sich um spezielle DECT-Systeme, bei denen insbesondere die Interoperabilitat von DECT-Sprachanwendungen sichergestellt ist.

Die Figur 1 zeigt einen beispielsweise durch drei DECT/GAP-Funkzellen FZ1...FZ3 lückenlos gebildeten DECT/GAP-Funkbereich FB. In den Funkzellen FZ1...FZ3 sind in den Zellenzentren DECT/GAP-Basisstationen RFP1...RFP3 (**R**adio **F**ixed **P**art) angeordnet. So befinden sich eine erste DECT/GAP-Basisstation RFP1 in einer ersten DECT/GAP-Funkzelle FZ1, eine zweite DECT/GAP-Basisstation RFP2 in einer zweiten DECT/GAP-Funkzelle FZ2 und eine dritte DECT/GAP-Basisstation RFP3 in einer dritten DECT/GAP-Funkzelle FZ3. Die drei Basisstationen RFP1...RFP3 sind über ein Vermittlungssystem VS z.B. an ein öffentliches Telefonnetz PSTN (**P**ublic **S**witched **T**elephone **N**etwork) angeschlossen und somit untereinander verbunden. Aus der EP-0 466 736 B1 ist es bekannt, daß das Vermittlungssystem VS als Nebenstellenanlage PABX (**P**rivate **A**utomatic **B**ranch E**X**change) ausgebildet ist.

Gemäß der nachveröffentlichten aus der deutschen Patentanmeldung P 19 519 966.9 hervorgegangenen internationalen Anmeldung PCT/DE96/00933 (Veröffentlichungsnummer WO 96/38990) ist es in Verbindung mit der US-5,388,102 und der Druckschrift Nachrichtentechnik Elektronik, Berlin 41-43, Teil 1 bis 10, T1: (1991) Heft 3, Seiten 99 bis 102; T2: (1991) Heft 4, Seiten 138 bis 143; T3: (1991) Heft 5, Seiten 179 bis 182 und Heft 6, Seiten 219 bis 220; T4: (1991) Heft 6, Seiten 220 bis 222 und (1992) Heft 1, Seiten 19 bis 20; T5: (1992) Heft 2, Seiten 59 bis 62 und (1992) Heft 3, Seiten 99 bis 102; T6: (1992) Heft 4, Seiten 150 bis 153; T7: (1992) Heft 6, Seiten 238 bis 241; T8: (1993) Heft 1, Seiten 29 bis 33; T9: (1993) Heft 2, Seiten 95 bis 97 und (1993) Heft 3, Seiten 129 bis 135; T10; (1993) Heft 4, Seiten 187 bis 190 auch möglich, die drei Basisstationen RFP1...RFP3 über einen s₀-Bus mit dem Vermittlungssystem VS zu verbinden. Das Vermittlungssystem VS weist dazu eine Schnittstelle SS auf, die
(1) für den Fall, daß das Vermittlungssystem VS als digitale Ortsvermittlungsstelle DOVS ausgebildet ist, als Netzabschluß NT (**N**etwork **T**ermination) dient,
(2) für den Fall, daß das Vermittlungssystem VS als Nebenstellenanlage PABX ausgebildet ist, als S₀-Schnittstelle S₀-SS dient,
(3) für den Fall, daß das Vermittlungssystem VS als Ortsvermittlungsstelle OVS ausgebildet ist, als Nebenstellenanlage PABX dient.

Jede Basisstation RFP1...RFP3 kann innerhalb ihrer Funkzelle FZ1...FZ3 über eine für den Frequenzbereich zwischen 1,88 und 1,90 GHz ausgelegte DECT-Luftschnittstelle maximal 12 Telekommunikationsverbindungen zu DECT/GAP-Mobilteilen PP (**P**ortable **P**art) parallel aufbauen und unterhalten.

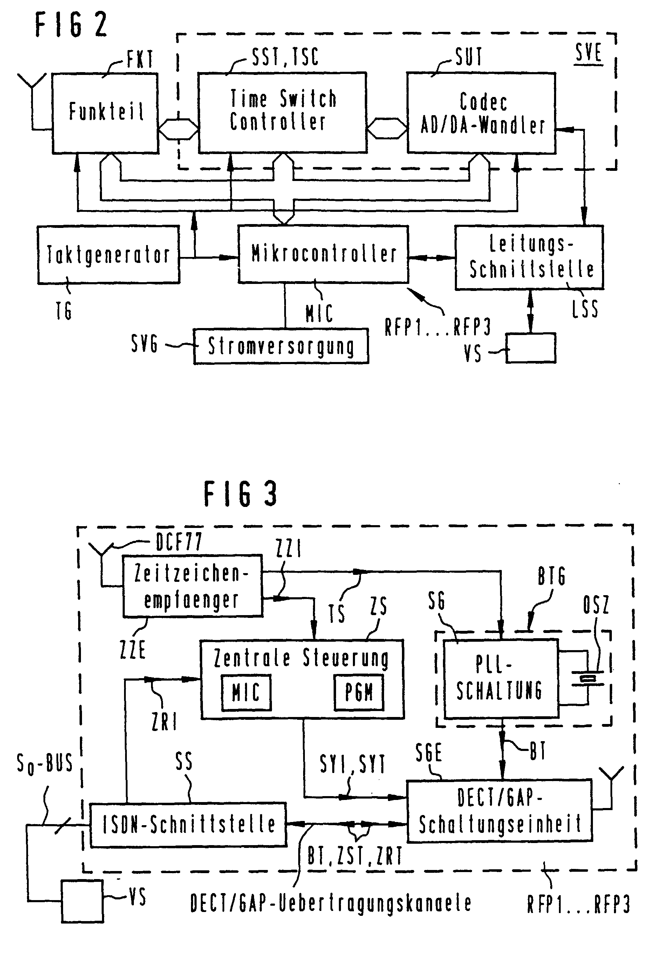

FIG 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstationen RFP1...RFP3 nach FIG 1. Dieser besteht aus einem Funkteil FKT, einer Signalverarbeitungseinrichtung SVE mit einem als Time Switch Controller TSC mit Vermittlungsfunktionen (Switch-Funktionen) ausgebildeten Signalsteuerungsteil SST und einem als CODEC und AD/DA- Wandler ausgebildeten Signalumformungsteil SUT, einem Taktgenerator TG, einem Mikrocontroller MIC, einer Leitungsschnittstelle LSS zum Vermittlungssystem VS und einer Stromversorgung SVG, die in der dargestellten Weise miteinander verbunden sind. Die prinzipielle Funktionsweise des Schaltungsaufbaus in Verbindung mit dem Mobilteil ist beispielsweise in der vorstehend zitierten Druckschrift beschrieben.

In dem Funkbereich FB nach FIG 1 befinden sich beispielsweise insgesamt 10 Mobilteile PP, von denen ein erstes Mobilteil PP1, ein zweites Mobilteil PP2 und ein drittes Mobilteil PP3 der ersten Basisstation RFP1, ein viertes Mobilteil PP4, ein fünftes Mobilteil PP5, ein sechstes Mobilteil PP6, ein siebtes Mobilteil PP7 und das dritte Mobilteil PP3 der zweiten Basisstation RFP2 sowie ein achtes Mobilteil PP8, ein neuntes Mobilteil PP9, ein zehntes Mobilteil PP10 und das siebte Mobilteil PP7 der dritten Basisstation RFP3 zugeordnet sind. Das dritte Mobilteil PP3 ist sowohl mit der ersten Basisstation RFP1 als auch mit der zweiten Basisstation RFP2 telekommunikationsfähig, weil es sich im Überschneidungsbereich der ersten Funkzelle FZ1 und der zweiten Funkzelle FZ2 befindet. In Analogie dazu ist das siebte Mobilteil PP7, das sich im Überschneidungsbereich der zweiten Funkzelle FZ2 mit der dritten Funkzelle FZ3 befindet, sowohl mit der zweiten Basisstation RFB2 als auch mit der dritten Basisstation RFP3 telekommunikationsfähig.

Für den Betrieb des zellularen DECT/GAP-Systems nach Figur 1 - im Sinne einer mobilen Telekommunikation - sind in Analogie zum zellularen Mobilfunksystem - z. B. nach dem GSM-Standard (**G**roupe **S**pöcicale **M**obile oder **G**lobal **S**ystem for **M**obile Communication; vgl. Informatik Spektrum 14 (1991) Juni, Nr. 3, Berlin, DE; A. Mann: "Der GSM-Standard - Grundlage für digitale europäische Mobilfunknetze", Seiten 137 bis 152) - wird die Realisierung systemspezifische Leistungsmerkmale, wie "Roaming (mit einem Mobilteil durch den Funkbereich wandern), Handover (Weiterreichen einer Duplex-Funkverbindung "Basisstation" → Mobilteil" innerhalb einer Zelle (Intra-Cell Handover) und im Überschneidungsbereich zweier Funkzellen (Inter-Cell Handover), Synchronisation der im System vorhandenen Basisstationen, vorausgesetzt. Dafür ist eine entsprechende Koordination der in dem DECT/GAP-System nach Figur 1 ablaufenden Funktionsabläufe erforderlich. Um hierbei auf eine Koordination von außen, d. h. von dem leitungsgebundenen öffentlichen Telefonnetz verzichten zu können, ist gemäß dem DECT-Standard das **D**ynamic **C**hannel **A**llocation-Verfahren (DCA-Verfahren) vorgesehen. Wenn z. B. eine DECT-Verbindung aufgebaut wird, wird diejenige Frequenz und dasjenige Zeitfenster mit der geringsten Interferenz gesucht. Die Höhe (Stärke) der Interferenz hängt vorrangig davon ab, ob
- (a): bereits an einer anderen Basisstation ein Gespräch geführt wird oder
- (b): ein Mobilteil durch Bewegung in Sichtkontakt mit einer zuvor abgeschatteten Basisstation kommt.

Eine sich hieraus ergebende Erhöhung der Interferenz kann mit dem dem DECT/GAP-System zugrundegelegten TDMA-Übertragungsverfahren (**T**ime **D**ivision **M**ultiple **A**ccess) begegnet werden. Nach dem TDMA-Verfahren wird lediglich ein Zeitschlitz für die eigentliche Übertragung gebraucht; die übrigen elf Zeitschlitze können für Messungen verwendet werden. Dadurch kann ein alternatives Frequenz/Zeitschlitzpaar ermittelt werden, auf das die Verbindung umgeschaltet werden kann. Dies geschieht im Rahmen einer adaptiven Kanalzuweisung gemäß dem DECT-Standard (vgl. Nachrichtentechnik Elektronik 42 (1992) Jan./Feb., Nr. 1, Berlin; U. Pilger: "Struktur des DECT-Standards", Seite 28.3.2.6) durch ein "Connection Handover" (Intra-Cell Handover).

Um nun neben dem "Intra-Cell Handover" insbesondere das bei zellularen DECT-Systemen regelmäßig auftretende "Inter-Cell Handover"-Problem in den Begriff zu bekommen, muß das für solche zellularen DECT/GAP-Systeme vorgesehene Mobilteil zu jedem Zeitpunkt einer aktiven Telekommunikationsverbindung zu einer Basisstation in der Lage sein, bedingt durch einen Zellenwechsel innerhalb des Funkbereichs die Basisstation zu wechseln (Aufbau einer Telekommunikationsverbindung zu einer anderen Basisstation, ,wenn das Mobilteil sich in einem Überschneidungsbereich von zwei Funkzellen befindet) und dabei die bereits bestehende aktive Telekommunikationsverbindung unterbrechungsfrei (seamless) an die Basisstation weiterzureichen (seamless Handover).

Der DECT-Standard sieht hierfür gemäß der Druckschrift Nachrichtentechnik Elektronik 42 (1992) Jan./Feb., Nr. 1, Berlin; U. Pilger: "Struktur des DECT-Standards", Seite 28.3.2.6 vor, daß das Mobilteil selbständig bei einer Verschlechterung der Übertragungsqualität der bestehenden Telekommunikationsverbindung aufgrund von die Übertragungsqualität angebenden Indikatoren (z. B. Signalfeldstärke, CRC-Werte etc.) parallel zu der bestehenden Verbindung eine zweite Telekommunikationsverbindung aufbaut. Bei dieser "Inter-Cell Handover"-Prozedur wird die Tatsache, das Mobilteil im Rahmen der dynamischen, dezentralisierten Kanalzuweisung (DCA-Verfahren) ständig über den Status der in der momentanen Umgebung verfügbaren Kanäle informiert sind, derart ausgenutzt, daß die zweite Verbindung aufgrund des Eintrages in eine Kanalliste aufgebaut wird.

Ein unterbrechungsfreies Handover ist mit der vorstehenden Prozedur nur dann möglich, wenn das Mobilteil sich in einem DECT/GAP-System mit synchronisierten Basisstationen befindet. In einem solchen synchronen zellularen System kann das Mobilteil dann zusätzlich zu der bereits bestehenden Telekommunikationsverbindung zu einer Basisstation (Ursprungs-Basisstation) mindestens eine weitere Verbindung zu einer anderen Basisstation einer anderen Funkzelle aufbauen, ohne dabei die Synchronität zur Ursprungs-Basisstation zu verlieren. Ein solches synchrones zellulares DECT/GAP-System konnte bisher nur mit erheblichem Systemaufwand durch eine zusätzliche Drahtverbindung zwischen den Basisstationen realisiert werden.

Aus der DE-42 15 730 A1 ist ein zellulares Zeitschlitz-Funksystem mit mindestens einer Funkzentrale, mehreren adressierbaren Funkstellung und mehreren adressierbaren Einkanal-Signalempfängern bekannt, wobei die Funkzentrale ein für einen Signalempfänger bestimmtes, die Empfängeradresse und eine Nachricht enthaltenes Datentelegramm in einem durch ein eigenes Zeitnormal oder das über den externen Zeitsender DCF77 gesendete Zeitnormal synchronisierten Zeitschlitz aussendet. Dieses Datentelegramm wird von dem Signalempfänger entweder unmittelbar oder über eine Funkstelle oder mehrere Funkstellen, die das Datentelegramm weiterleiten, empfangen und ausgewertet. Das Datentelegramm enthält ein Zeitschlitzkriterium, das den aktuellen Zeitschlitz der sendenden Funkzentrale oder Funkstelle angibt. Die von der Funkzentrale erreichbaren Funkstellen werten das Datentelegramm aus, wobei die Funkstellen durch das Zeitschlitzkriterium synchronisiert werden. Die Daten des Datentelegramms werden von der adressierten Funkstelle zwischengespeichert. Die adressierte Funkstelle ersetzt das von der Funkzentrale empfangene Zeitschlitzkriterium durch ein eigenes Zeitschlitzkriterium und sendet die zwischengespeicherten Daten zusammen mit dem eigenen Zeitschlitzkriterium als neues Datentelegramm in einem ihr zugeordneten Zeitschlitz aus. Senden benachbarte Funkstellen zur gleichen Zeit ein Datentelegramm aus, so wird der dafür benötigte Synchronismus entweder durch das von der Fünkzentrale empfangene Datentelegramm oder durch das von dem Zeitsender DCF77 gesendete Zeitnormal in jeder Funkstelle erreicht.

Aus der DE-28 12 774 A1 ist ein Verfahren und eine Vorrichtung zur Bereitstellung von Synchronisationsimpulsen für die drahtlose gegenseitige Datenübertragung zwischen mehreren Stationen bekannt, bei dem bzw. der aus von einem Zeitzeichensender ausgegebene Zeitzeichen und gegebenenfalls aus von einem Normalfrequenzsender mit hoher Frequenzkonstanz abgegebene Frequenzinformationen die Synchronisationsimpulse abgeleitet werden.

Aus der WO 94/18764 ist ein Duplex-Kommunikationssystem bekannt, bei dem zwei Funk-Basisstationen über jeweils eine Drahtverbindung an eine ISDN-Nebenstellenanlage angeschlossen sind. Jede Basisstation enthält jeweils eine ISDN-Schnittstelle, eine Steuereinrichtung, eine Sende-/Empfangseinrichtung und eine Takteinrichtung. Zur Steuerung der Frequenz der Takteinrichtungen in den Basisstationen wird aus der ISDN-Nebenstellenanlage ein gemeinsamer Takt abgeleitet und über die Drahtverbindungen zu den einzelnen Basisstationen übertragen.

Die der Erfindung zugrundeliegende Aufgabe besteht darin, die zeitliche Auflösung von Synchronisationsinformationen bei der Synchronisation von Basisstationen eines drahtlosen Mehrzellen-Telekommunikationssystems (z. B. eines DECT-spezifischen **CMI**-Systems; **C**ordless **M**ulticell **I**ntegration) zu verbessern.

Diese Aufgabe wird durch die Merkmale des Patentanspruches 1 gelost.

Weiterhin wird die Aufgabe durch die Merkmale des Patentanspruches 5 gelöst.

Die der Erfindung zugrundeliegende Idee besteht darin, daß die Basisstationen eines drahtlosen Mehrzellen-Telekommunikationssystems der eingangs genannten Art - z.B. ein zellulares DECT/GAP-System - eine von einem Zeitzeichensender gesendete Zeitzeichen-Funknachricht - z.B. das DCF77-Signal - empfangen, mit dem die basisstationsspezifischen, sich an einen Telekommunikationsstandard - z.B. dem DECT/GAP-Standard - für die drahtlose Telekommunikation in dem Mehrzellen-Telekommunikationssystems orientierenden Funktionsabläufe der Basisstationen zeitlich synchron gesteuert werden können. Mit einem in der Zeitzeichen-Funknachricht enthaltenen, bezüglich der Frequenz sehr genauem Tragersignal wird beispielsweise der DECT/GAP-Bittakt gesteuert. Darüber hinaus wird mit einem in der Zeitzeichen-Funknachricht enthaltenen, dem Trägersignal aufmodulierten Zeitinformation beispielsweise der DECT/GAP-Zeitschlitztakt und/oder Zeitrahmentakt gesteuert.

Außerdem wird der DECT/GAP-Zeitschlitztakt und/oder Zeitrahmentakt zusätzlich zu der in der Zeitzeichen-Funknachricht enthaltenen Zeitinformation mit einer weiteren Zeitinformation - z.B. dem Rahmentakt des S0-Bus, über den die Basisstationen miteinander verbunden sind - gesteuert.

Weitere vorteilhafte Weiterbildungen sowie Ver- und Anwendungen sind in den Unteransprüchen angegeben.

Ein Ausführungsbeispiel der Erfindung wird anhand der FIG 3 erläutert.

Die Figur 3 zeigt ausgehend von dem Schaltungsaufbau nach Figur 2 einen erweiterten Schaltungsaufbau der Basisstationen RFP1...RFP3. Mit diesem erweiterten Schaltungsaufbau sind die Basisstationen RFP1...RFP3 in der Lage, den zeitlichen Ablauf der DECT-spezifischen Funktionsabläufe zu synchronisieren. Diese DECT-spezifischen Funktionsabläufe finden in einer DECT-Schaltungseinheit SGE statt. Die Schaltungseinheit SGE enthält das Funkteil FKT und die Signalverarbeitungseinrichtung SVE nach Figur 2. Die Leitungsschnittstelle LSS nach Figur 2 ist dadurch, daß die Basisstationen RFP1...RFP3 nach Figur 1 über den s₀-Bus mit dem Vermittlungssystem VS verbunden sind, als ISDN-Schnittstelle SS ausgebildet. Durch die ISDN-Schnittstelle SS werden die von der DECT/GAP-Schaltungseinheit SGE nach dem DECT/GAP-Standard im Rahmen der Funktionsabläufe in der Basisstation RFP1...RFP3 aufgebauten DECT/GAP-Übertragungskanäle an den s₀-Bus angeschlossen. Zur Steuerung der Funktionsabläufe in den Basisstationen RFP1...RFP3 ist in den Basisstationen RFP1...RFP3 eine Zentrale Steuerung ZS vorgesehen, die neben dem Mikrocontroller MIC nach Figur 2 noch weitere Programmodule PGM aufweist. Die Strom- und Taktversorgung der Zentralen Steuerung ZS wird analog zu der Darstellung in Figur 2 von der Stromversorgung SVG bzw. dem Taktgenerator TG übernommen. Damit insbesondere der Aufbau der DECT/GAP-Übertragungskanäle im Rahmen der basisstationsspezifischen Funktionsabläufe in den einzelnen Basisstationen RFP1...RFP3 synchron abläuft, ist die Zentrale Steuerung ZS mit einem Zeitzeichenempfänger ZZE verbunden. Mit diesem Zeitzeichenempfänger ZZE kann ein von einem Zeitsender gesendete Zeitzeichen-Funknachricht DCF77 empfangen werden. Die Zeitzeichen-Funknachricht DCF77 besteht aus einem Trägersignal TS mit einer Trägerfrequenz f (z.B. f= 77,5 kHz) und einer dem Trägersignal TS durch Amplitudenmodulation aufgezwungenen Zeitzeicheninformation ZZI. Während das Trägersignal TS einem Bittaktgenerator BTG für die DECT/GAP-Schaltungseinheit SGE zugeführt wird, wird die Zeitzeicheninformation ZZI der Zentralen Steuerung ZS zugeführt.

Der Bittaktgenerator BTG ist Bestandteil des Taktgenerators TG nach FIG 2 und weist eine PLL-Schaltung SG mit einem Quarzoszillator OSZ auf. Der Bittaktgenerator BTG liefert für den Aufbau der DECT/GAP-Übertragungskanäle einen DECT/GAP-Bittakt BT an die DECT/GAP-Schaltungseinheit SGE. Durch das dem Bittaktgenerator BTG zugeführte Trägersignals TS kann dieser bezüglich der von dem Quarzoszillator OSZ bereitgestellten Oszillatorfrequenz nachgestimmt werden. Die in dem Zeitzeichensender mit einem hochgenauen Frequenznormal gekoppelte Trägerfrequenz f dient dabei als Frequenzreferenz für den Bittaktgenerator BTG. Dadurch kann einerseits der von dem Bittaktgenerator BTG abgegebene DECT/GAP-Bittakt BT sehr genau eingetellt und andererseits eine Synchronisation der Basistationen RFP1...RFP3 bezüglich des DECT/GAP-Bittakts BT erreicht werden.

Die der Zentralen Steuerung ZS zugeführte Zeitzeicheninformation ZZI ist eine codierte Zeitzeicheninformation mit der Angabe von Zeitgrößen, wie Jahr, Monat, Woche, Tag, Stunde, Minute und Sekunde. Aus der Zeitinformationen ZZI bildet die Zentrale Steuerung ZS mit dem Mikrocontroller MIC und den Programmodulen PGM eine Synchronisationsinformation SYI, die der DECT/GAP-Schaltungseinheit SGE zugeführt wird. Aufgrund dieser Synchronisationsinformation SYI wird in der DECT/GAP-Schaltungseinheit SGE ein DECT/GAP-Zeitschlitztakt ZST und ein DECT/GAP-Zeitrahmentakt ZRT der DECT/GAP-Übertragungskanäle an einen in der Synchronisationsinformation SYI enthaltenen Synchronisationstakt SYT angepaßt. Die Anpassung kann dabei so aussehen, daß die DECT/GAP-Zeitrahmen mit jeweils einer Zeitdauer von 160 ms jeweils in einem vereinbarten Zeitraster, z. B. zu jeder vollen Minute, beginnen. Um die Auflösung der aus der Zeitzeicheninformation ZZI gewonnenen Synchronisationsinformation SYI (1/f = 13 µs) zu verbessern, erhält die Zentrale Steuerung ZS von der ISDN-Schnittstelle SS eine Zeitrahmeninformation ZRI des S₀-Bus, in dem der Rahmentakt des s₀-Bus enthalten ist. Die maximale Abweichung zwischen zwei am S₀-Bus betriebenen Endgeräten (Terminal End-point) beträgt 2 µs.

## Patentansprüche

1. Verfahren zum Synchronisieren von Basisstationen eines drahtlosen Mehrzellen-Telekommunikationssystems, bei dem jede einer Funkzelle (FZ1...FZ3) des Mehrzellen-Telekommunikationssystems zugeordnete, mit einem Vermittlungssystem (VS, DOVS, PABX, OVS) verbundene Basisstation (RFP1...RFP3) im Rahmen von sich an einen drahtlosen Telekommunikationsstandard des Mehrzellen-Telekommunikationssystems orientierenden Funktionsabläufen folgende Verfahrensschritte durchführt:
(a) Empfangen einer Zeitzeichen-Funknachricht, bestehend aus einem Trägersignal (TS) und einer in einem periodischen Zeitabstand auf das Trägersignal (TS) aufmodulierten ersten Zeitinformation (ZZI),
(b) zeitliches Steuern der basisstationsindividuellen Funktionsabläufe in Abhängigkeit von der Zeitzeichen-Funknachricht derart, daß
(b1) ein durch den Standard vorgegebenes, die Funktionsabläufe in der Basisstation (RFP1..RFP3) bemessendes erstes Zeitmaß (BT) an einen durch das Trägersignal (TS) vorgegebenen ersten Rhythmus angepaßt wird,
(b2) mindestens ein weiteres durch den Standard vorgegebenes, die Funktionsabläufe in der Basisstation (RFP1...RFP3) bemessendes Zeitmaß (ZST, ZRT) an einen zweiten Rhythmus angepaßt wird, der durch den Empfang der ersten Zeitinformation (ZZI) vorgegeben wird und an einen dritten Rhythmus angepaßt wird, der durch das basisstationsseitige Empfangen einer zweiten Zeitinformation (ZRI) vorgegeben wird, die eine für die Verbindung zwischen der Basisstation (RFP1...RFP3) und dem Vermittlungssystem (VS, DOVS, PABX, OVS) maßgebende Taktinformation enthält.

2. Verfahren nach Anspruch 1, **dadurch gekennzeichnet,** daß
die Zeitmaße (BT, ZST, ZRT) regelmäßig an die vorgegebenen Rhythmen angepaßt werden.

3. Verfahren nach Anspruch 1 oder 2, **gekennzeichnet** durch:
DECT/GAP-spezifische Schnurlos-Basisstationen, ein DECT/GAP-spezifisches zellulares Schnurlos-Telekommunikationssystem, einen DECT/GAP-Standard als den Telekommunikationsstandard, einen DECT/GAP-Bittakt als das erste Zeitmaß (BT), zwei weitere Zeitmaße, einem zweiten Zeitmaß (ZST) und einem dritten Zeitmaß (ZRT), einen DECT/GAP-Zeitschlitz als das zweite Zeitmaß (ZST) und einen DECT/GAP-Zeitrahmen als das dritte Zeitmaß (ZRT).

4. Verfahren nach Anspruch 1, **gekennzeichnet** durch:
(a) Anschließen der Basisstationen (RFP1...RFP3) des drahtlosen Mehrzellen-Telekommunikationssystems an einen S₀-Bus,
(b) den S₀-Zeitrahmen auf dem S₀-Bus als die zweite Zeitinformation (ZRI).

5. Basisstation eines drahtlosen Mehrzellen-Telekommunikationssystems, die in einer Funkzelle (FZ1..FZ3) des Mehrzellen-Telekommunikationssystems angeordnet und mit einem Vermittlungssystem (VS, DOVS, PABX, OVS) verbunden ist und deren Funktionsabläufe sich an einen drahtlosen Telekommunikationsstandard des Mehrzellen-Telekommunikationssystems orientieren, mit folgenden Merkmalen:
(a) erste Mittel (ZZE) zum Empfangen einer Zeitzeichen-Funknachricht, die aus einem Trägersignal (TS) und einer in einem periodischen Zeitabstand auf das Trägersignal (TS) aufmodulierten ersten Zeitinformation (ZZI) besteht,
(b) zweite Mittel (ZS, MIC, PGM, BTG, SGE) zum zeitlichen Steuern der basisstationsindividuellen Funktionsabläufe in Abhängigkeit von der Zeitzeichen-Funknachricht, die derart ausgebildet und mit den ersten Mitteln (ZZE) verbunden sind, daß
(b1) ein durch den Standard vorgegebenes, die Funktionsabläufe in der Basisstation (RFP1...RFP3) bemessendes erstes Zeitmaß (BT) an einen durch das Trägersignal (TS) vorgegebenen ersten Rhythmus angepaßt wird,
(b2) mindestens ein weiteres durch den Standard vorgegebenes, die Funktionsablaufe in der Basisstation (RFP1..RFP3) bemessendes Zeitmaß (ZST, ZRT) an einen durch den Empfang der ersten Zeitinformation (ZZI) vorgegebenen zweiten Rhythmus angepaßt wird,
(c) dritte Mittel (SS) zum Empfangen einer zweiten Zeitinformation (ZRI), die eine für die Verbindung zwischen der Basisstation (RFP1...RFP3) und dem Vermittlungssystem (VS, DOVS, PABX, OVS) maßgebende Taktinformation enthält,
(d) die dritten Mittel (SS) sind mit den zweiten Mitteln (ZS, MIC, PGM, BTG, SGE) derart verbunden, daß das weitere Zeitmaß (ZST, ZRT) zusätzlich an einen durch den Empfang der zweiten Zeitinformation (ZRI) vorgegebenen dritten Rhythmus angepaßt wird.

6. Basisstation nach Anspruch 5, dadurch **gekennzeichnet,** daß
die dritten Mittel (SS) zum Empfang der zweiten Zeitinformation (ZRI) an einen S₀-Bus angeschlossen sind und die zweite Zeitinformation (ZRI) als auf dem S₀-Bus übertragener S₀-Zeitrahmen ausgebildet ist.

7. Basisstation nach Anspruch 5 oder 6, **gekennzeichnet** durch:
eine DECT/GAP-spezifische Schnurlos-Basisstation, ein DECT/GAP-spezifisches zellulares Schnurlos-Telekommunikationssystem, einen DECT/GAP-Standard als den Telekommunikationsstandard, einen DECT/GAP-Bittakt als das erste Zeitmaß (BT), zwei weitere Zeitmaße, einem zweiten Zeitmaß (ZST) und einem dritten Zeitmaß (ZRT), einen DECT/GAP-Zeitschlitz als das zweite Zeitmaß (ZST) und einen DECT/GAP-Zeitrahmen als das dritte Zeitmaß (ZRT).

## Claims

1. Method for synchronization of base stations in a wire-free multicell telecommunications system, in which each base station (RFP1...RFP3), which is assigned to a radio cell (FZ1...FZ3) in the multicell telecommunications system and is connected to a switching system (VS, DOVS, PABX, OVS), carries out the following method steps in the course of function sequences which are oriented to a wire-free telecommunications standard for the multicell telecommunications system:
(a) reception of a time signal radio message, comprising a carrier signal (TS) and first time information (ZZI) which is modulated onto the carrier signal (TS) at a periodic time interval,
(b) time control of the base-station-specific function sequences as a function of the time signal radio message, in such a manner that
(b1) a first time measure (BT), which is predetermined by the standard and controls the function sequences in the base station (RFP1..RFP3), is matched to a first cycle which is predetermined by the carrier signal (TS),
(b2) at least one further time measure (ZST, ZRT), which is predetermined by the standard and controls the function sequences in the base station (RFP1...RFP3), is matched to a second cycle which is predetermined by the reception of the first time information (ZZI) and is matched to a third cycle which is predetermined by reception of second time information (ZRI) at the base-station end, which second time information (ZRI) contains clock information which governs the connection between the base station (RFP1...RFP3), and the switching system (VS, DOVS, PABX, OVS).

2. Method according to Claim 1, characterized in that the time measures (BT, ZST, ZRT) are regularly matched to the predetermined cycles.

3. Method according to Claim 1 or 2, characterized by:
DECT/GAP-specific cordless base stations, a DECT/GAP-specific cellular cordless telecommunications system, a DECT/GAP standard as the telecommunications standard, a DECT/GAP bit clock as the first time measure (BT), two further time measures, that is to say a second time measure (ZST) and a third time measure (ZRT), a DECT/GAP time slot as the second time measure (ZST) and a DECT/GAP time frame as the third time measure (ZRT).

4. Method according to Claim 1, characterized by:
(a) connection of the base stations (RFP1...RFP3) of the wire-free multicell telecommunications system to an S₀ bus,
(b) the S₀ time frame on the S₀ bus as the second time information (ZRI).

5. Base station in a wire-free multicell telecommunications system, which is arranged in a radio cell (FZ1..FZ3) in the multicell telecommunications system and is connected to a switching system (VS, DOVS, PABX, OVS), and whose function sequences are oriented to a wire-free telecommunications standard for the multicell telecommunications system, having the following features:
(a) first means (ZZE) for reception of a time signal radio message which comprises a carrier signal (TS) and first time information (ZZI) which is modulated onto the carrier signal (TS) at a periodic time interval,
(b) second means (ZS, MIC, PGM, BTG, SGE) for time control of the base-station-specific function sequences as a function of the time signal radio message, which second means are designed and are connected to the first means (ZZE) in such a manner that
(b1) a first time measure (BT), which is predetermined by the standard and controls the function sequences in the base station (RFP1...RFP3), is matched to a first cycle which is predetermined by the carrier signal (TS),
(b2) at least one further time measure (ZST, ZRT), which is predetermined by the standard and controls the function sequences in the base station (RFP1..RFP3), is matched to a second cycle which is predetermined by the reception of the first time information (ZZI) and is matched to a second cycle which is predetermined by the reception of the first time information (ZZI),
(c) third means (SS) for reception of second time information (ZRI) which contains clock information which governs the connection between the base station (RFP1...RFP3) and the switching system (VS, DOVS, PABX, OVS),
(d) the third means (SS) are connected to the second means (ZS, MIC, PGM, BTG, SGE) in such a manner that the further time measure (ZST, ZRT) is additionally matched to a third cycle which is predetermined by the reception of the second time information (ZRI).

6. Base station according to Claim 5, characterized in that the third means (SS) are connected to an So bus for reception of the second time information (ZRI), and the second time information (ZRI) is designed as S₀ time frames which are transmitted on the S₀ bus.

7. Base station according to Claim 5 or 6, characterized by:
a DECT/GAP-specific cordless base station, a DECT/GAP-specific cellular cordless telecommunications system, a DECT/GAP standard as the telecommunications standard, a DECT/GAP bit clock as the first time measure (BT), two further time measures, that is to say a second time measure (ZST) and a third time measure (ZRT), a DECT/GAP time slot as the second time measure (ZST) and a DECT/GAP time frame as the third time measure (ZRT).

## Revendications

1. Procédé pour synchroniser des stations de base d'un système de télécommunications multicellulaire sans fil, dans lequel chaque station (RFP1...RFP3) de base, associée à une cellule (FZ1...FZ3) radio du système de télécommunications multicellulaire et reliée à un système (VS, DOVS, PABX, OVS) de commutation, effectue, dans le cadre d'opérations fonctionnelles se rapportant à une norme de télécommunication sans fil du système de télécommunications multicellulaire, les étapes opératoires suivantes :
(a) réception d'une information radio-signal temporelle, constituée d'un signal (TS) porteur et d'une première information (ZZI) temporelle modulée à un intervalle de temps périodique sur le signal (TS) porteur,
(b) commande temporelle des opérations fonctionnelles spécifiques à la station de base en fonction de l'information radio-signal temporelle de manière que
(b1) une première échelle (BT) de temps prescrite par la norme, mesurant les opérations fonctionnelles dans la station (RFP1...RFP3) de base, soit adaptée à un premier rythme prescrit par le signal (TS) porteur,
(b2) au moins une échelle (ZST, ZRT) de temps supplémentaire, prescrite par la norme, mesurant les opérations fonctionnelles dans la station (RFP1...RFP3) de base, soit adaptée à un deuxième rythme qui est prescrit par la réception de la première information (ZZI) temporelle, et adaptée à un troisième rythme qui est prescrit par la réception côté station de base d'une deuxième information (ZRI) temporelle qui contient une information de cadence déterminante pour la liaison entre la station (RFP1...RFP3) de base et le système (VS, DOVS, PABX, OVS) de commutation.

2. Procédé suivant la revendication 1, caractérisé en ce que les échelles (BT), ZST, ZRT) de temps sont adaptées régulièrement au rythme prescrit.

3. Procédé suivant la revendication 1 ou 2, caractérisé en par :
des stations de base sans fil spécifiques DECT/GAP, un système de télécommunications multicellulaire sans fil spécifique DECT/GAP, une norme DECT/GAP comme norme de télécommunication, une cadence de bits DECT/GAP comme première échelle (BT) de temps, deux échelles de temps supplémentaires, une deuxième échelle (ZST) de temps et une troisième échelle (ZRT) de temps, un créneau temporel DECT/GAP comme la deuxième échelle (ZST) de temps et une trame temporelle DECT/GAP comma la troisième échelle (ZRT) de temps.

4. Procédé suivant la revendication 1, caractérisé par :
(a) un raccordement des stations (RFP1...RFP3) de base du système de télécommunications multicellulaire sans fil à un bus S₀,
(b) la trame temporelle S₀ sur le bus S₀ comme la deuxième information (ZRI) temporelle.

5. Station de base d'un système de télécommunications multicellulaire sans fil, qui est monté dans une cellule (FZ1...FZ3) radio du système de télécommunications multicellulaire et qui est reliée à un système (VS, DOVS, PABX, OVS) de commutation et dont les opérations fonctionnelles se rapportent à une norme de télécommunication sans fil du système de télécommunications multicellulaire, ayant les caractéristiques suivantes :
(a) des premiers moyens (ZZE) pour recevoir une information radio-signal temporelle, qui est constituée d'un signal (TS) porteur et d'une première information (ZZI) de temps modulée à un intervalle de temps périodique au signal (TS) porteur,
(b) des deuxièmes moyens (ZS, MIC, PGM, (BTG), SGE) pour commander dans le temps les opérations fonctionnelles spécifiques aux stations de base en fonction de l'information radio-signal temporelle, qui sont réalisées et qui sont reliées aux premiers moyens (ZZE) de manière que
(b1) une première échelle (BT) temporelle prescrite par la norme, mesurant les opérations fonctionnelles dans la station (RFP1...RFP3) de base, soit adaptée à un premier rythme prescrit par le signal (TS) porteur,
(b2) au moins une échelle (ZST, ZRT) de temps supplémentaire, prescrite par la norme, mesurant les opérations fonctionnelles dans la station (RFP1...RFP3) de base, soit adaptée à un deuxième rythme prescrit par la réception de la première information (ZZI) temporelle,
(d) des troisièmes moyens (SS) pour recevoir une deuxième information (ZRI) qui contient une information de cadence déterminante pour la liaison entre la station (RFP1...RFP3) de base et le système (VS, DOVS, PABX, OVS) de commutation,
(d) les troisièmes moyens (SS) sont reliés aux deuxièmes moyens (ZS, MIC, PGM, BTG, SGE) de manière que l'échelle (ZST, ZRT) de temps supplémentaire est adaptée de plus à un troisième rythme prescrit par la réception de la deuxième information (ZRI) temporelle.

6. Station de base suivant la revendication 5, caractérisée en ce que les troisièmes moyens (SS) pour recevoir la deuxième information (ZRI) temporelle sont raccordés à un bus S₀ et en ce que la deuxième information (ZRI) temporelle est réalisée en trame temporelle S₀ transmise sur le bus S₀.

7. Station de base suivant la revendication 5 ou 6, caractérisée par une station de base sans fil spécifique DECT/GAP, un système de télécommunications sans fil cellulaire spécifique DECT/GAP, une norme DECT/GAP comme la norme de télécommunication, une cadence de bits DECT/GAP comma la première échelle (BT) de temps, deux échelles de temps supplémentaires, une deuxième échelle (ZST) de temps et une troisième échelle (ZRT) de temps, un créneau temporel DECT/GAP comme la deuxième échelle (ZST) de temps et une trame temporelle DECT/GAP comme la troisième échelle (ZRT) de temps.
